**Europäisches Patentamt**

**European Patent Office**

**Office européen des brevets**

(19)

(11) Veröffentlichungsnummer : **0 215 790**
**B1**

# (12) EUROPÄISCHE PATENTSCHRIFT

(45) Veröffentlichungstag der Patentschrift :
**09.11.88**

(21) Anmeldenummer : **85902973.8**

(22) Anmeldetag : **04.05.85**

(86) Internationale Anmeldenummer :
**PCT/EP 85/00199**

(87) Internationale Veröffentlichungsnummer :
**WO/8505423 (05.12.85 Gazette 85/26)**

(51) Int. Cl.⁴ : **F 16 D 23/12, G 05 G 3/00**

(54) **FEDERANORDNUNG AN EINER SCHALTKUPPLUNG.**

(30) Priorität : **16.05.84 PCT/EP84/00146**

(43) Veröffentlichungstag der Anmeldung :
**01.04.87 Patentblatt 87/14**

(45) Bekanntmachung des Hinweises auf die Patenterteilung : **09.11.88 Patentblatt 88/45**

(84) Benannte Vertragsstaaten :
**AT BE CH DE FR GB IT LI SE**

(56) Entgegenhaltungen :
**DE-C- 230 424
DE-C- 578 901
FR-A- 321 550
GB-A- 2 018 934**

(73) Patentinhaber : **ZAHNRADFABRIK FRIEDRICHSHA-**
**FEN AKTIENGESELLSCHAFT**
**Löwentaler Strasse 100 Postfach 2520**
**D-7990 Friedrichshafen 1 (DE)**

(72) Erfinder : **DIETENBERGER, Josef**
**Kirchplatz**
**D-7961 Ebersbach (DE)**
Erfinder : **LEHLE, Hubert**
**Eschstrasse 6**
**D-7996 Meckenbeuren (DE)**

(74) Vertreter : **Raue, Reimund**
**Zahnradfabrik Friedrichshafen AG Löwentaler**
**Strasse 100 Postfach 2520**
**D-7990 Friedrichshafen 1 (DE)**

EP 0 215 790 B1

## Beschreibung

Die Erfindung betrifft eine Federanordnung gemäß dem Oberbegriff des Anspruches 1, wie sie auch beispielsweise bekannt ist aus der DE-C 230 424. Bei Schalteinrichtungen dieser Art sind die Federn dauernd wirksam, so daß die Federspannung nicht nur beim Schalten über Lager abgestützt werden muß. Auch ist keine Formschlüssigkeit herstellbar und stellungssichernde Postierungen fehlen. Die Betätigung über eine Stange ist platzraubend und ungünstig zu montieren. Die Stellkraft muß bei der bekannten Lösung auch bis zur Kraftschlußherbeiführung bzw. -aufhebung an der Schwenkwelle aufrechterhalten werden. Eine direkte Ausschaltung (ohne Federwirkung) ist dort nicht vorgesehen, so daß dem Fahrer bei dieser Bauweise das sichere Gefühl für tatsächlich vollzogene Ausschaltung nicht vermittelt werden kann.

Die Aufgabe der Erfindung besteht darin, eine axial kurz bauende, rasch und leicht einschaltbare, einfach montierbare und nachjustierbare Federanordnung für Formschluß-Schaltkupplungen zu schaffen, mit welcher eine ungefederte Direktausschaltung möglich ist und Rastierungen für wichtige Einstellungen vorgesehen werden können.

Die Lösung dieser Aufgabe wird durch die kennzeichnenden Merkmal des Anspruches 1 erreicht.

Dabei erfolgt die Stellkraftübertragung über einen platzsparenden Schwenktrieb, wobei die erhöhte Federspannung nur beim Einkuppelvorgang aufgebracht wird. Ein Auskuppeln ist mit starrem Kraftschluß unmittelbar möglich, ohne daß erst ein Federweg überwunden werden muß, da ein unmittelbarer Kraftschluß von Vorspannhebel und Schaltgabel über die Endpunkte des Bolzens herstellbar ist.

Zusätzliche axiale Baulänge auf dem in Formschluß bringbaren Wellenstrang wird vermieden und die Federn bleiben außerhalb der Erwärmungszone der Schiebemuffe. Demontage bzw. Justage der Federanordnung ist ohne Demontage der Schiebemuffe möglich, und mehrere gleichbleibende Teile lassen sich für verschiedene Muffengrößen bzw. Schaltkräfte und Schaltwege verwenden. Die Federn verhüten Vibrationsübergänge von der Schiebemuffe auf die Schwenkwelle bzw. umgekehrt, und die Endanschläge brauchen nicht unter Inkaufnahme von weiteren spielverursachenden Gelenken etc. in der (meist gummigelagerten) Fahrerkabine angeordnet werden. Der Federwiderstand steigt erst beim eigentlichen Einrasten in die Rastierung kurz an. Die Schaltgabel und der Vorspannhebel lassen sich vorteilhaft als Blechformteile kostengünstig und hoch belastbar herstellen, und der Hebel federt mit.

Weitere vorteilhafte Ausgestaltungen werden durch die Unteransprüche angegeben :

Nach Anspruch 2 kann die Federvorspannung in den Endlagen der Schiebemuffe reduziert sein.

Nach Anspruch 3 können die eigentlichen Betätigungszeiten auf die Zeiten beschränkt werden, die zur Erreichung einer der Rastierungsstellungen nötig sind.

Nach Anspruch 4 ergibt sich neben einer Doppelnutzung der Schwenkwelle bzw. deren Lager eine kinematisch günstige Anordnung.

Nach Anspruch 5 wird eine günstige Kraftverteilung auf 2 Federn und für diese eine Redundanz erzielt.

Nach Anspruch 6 wird eine massenfertigungsgünstige Hebel- und Rastierungs-Ausgestaltung erreicht.

Die Erfindung wird anhand des nachfolgenden Ausführungsbeispiels näher erläutert :

Fig. 1 zeigt einen Querschnitt durch den Wellenstrang bzw. die Schiebemuffe mit an den Schwenk-Enden der Schaltgabel angreifenden Federführungen und der Lagerung des Vorspannhebels auf der Schwenkwelle in einer Gehäusewand.

Fig. 2, 3 und 4 zeigen in jeweils gleicher Seitenansicht auf den Vorspannhebel und die dahinterliegende Schaltgabel gemäß der Anordnung nach Fig. 1 die möglichen Ein- und Ausschaltstellungen im Detail sowie die Ausgestaltung von Vorspannhebel und Schaltgabel in gewichts- und kostenmindernder Blechkonstruktion.

Fig. 5, 6 und 7 zeigen in schematischer Darstellung die 3 Einstellungsarten der Federanordnung gemäß Fig. 2, 3 und 4.

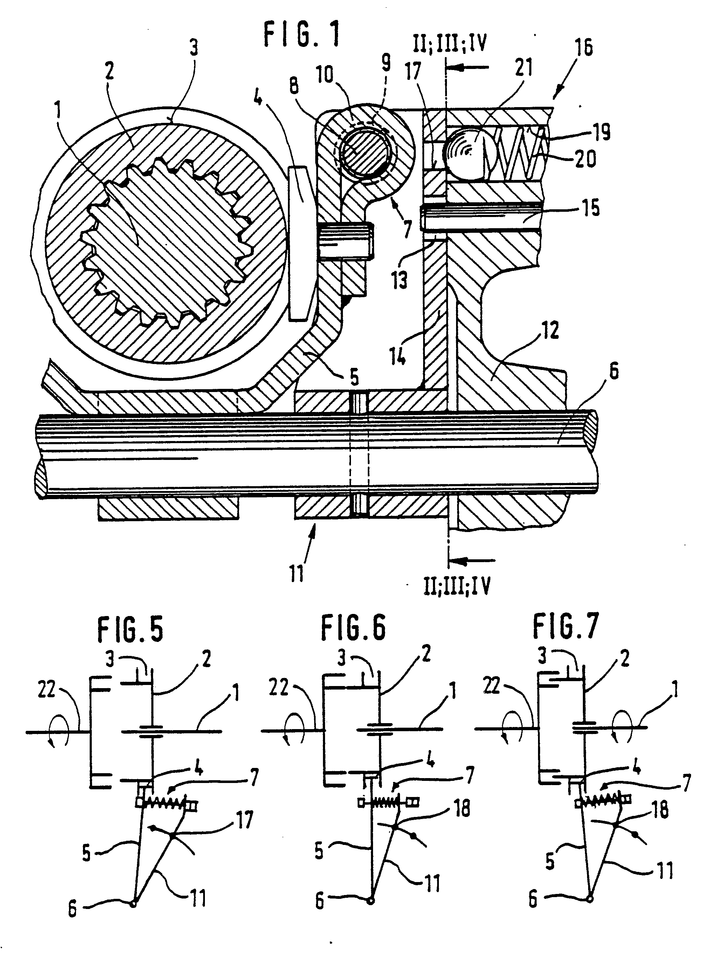

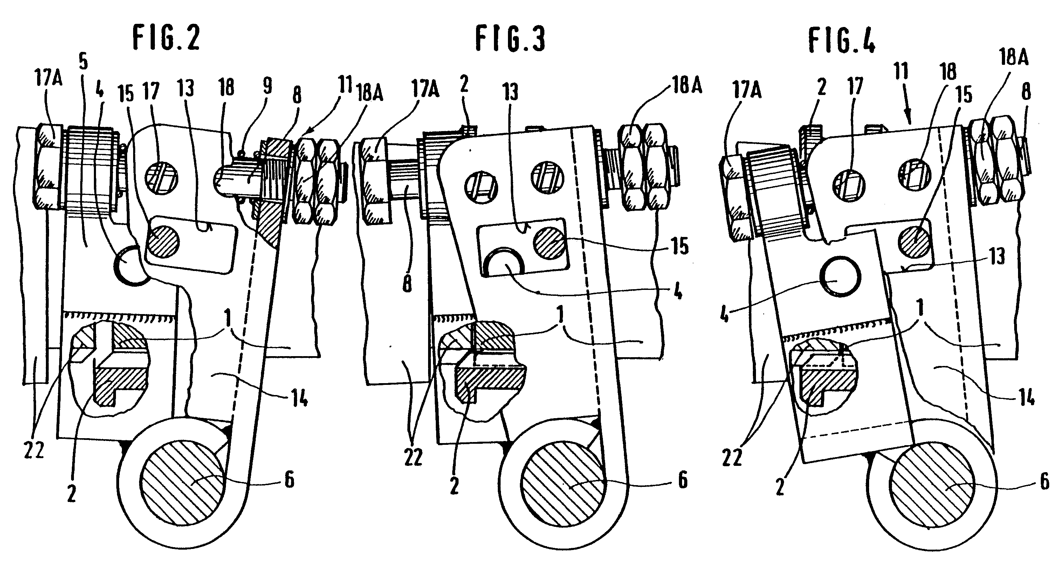

In Fig. 1 ist die auf der Abtriebswelle 1 drehfeste Schiebemuffe 2 durch einen in ihrer Umfangsnut 3 geführten Gleitstein 4 in Axialrichtung verschieblich. Der Gleitstein 4 ist drehbar gelagert am Schwenk-Ende einer Schaltgabel 5, die ihrerseits gemäß dem Beispiel auf einer die Abtriebswelle 1 in geringem Abstand kreuzenden Schwenkwelle 6 drehbar gelagert ist. In Schwenkrichtung mitnehmbar ist die Schaltgabel 5 aber nur über eine Federführung 7, deren Bolzen 8 von einer Feder 9 umschlossen wird. Der Bolzen 8 ist dazu einerseits an seinem schaltgabelseitigen Ende in einer am Schwenk-Ende der Schaltgabel 5 im Bereich der Lagerung des Gleitsteines 4 angeordneten Bolzenführung 10 und andererseits an seinem entgegengesetzten Ende, am Schwenk-Ende eines Vorspannhebels 11, axial beweglich geführt. Dieser Vorspannhebel 11 ist über die Schwenkwelle 6 begrenzt drehbar bzw. schwenkbar, welche gemäß Beispiel ihrerseits in einer Gehäusewand 12 gelagert ist. Die Schwenkbegrenzungen werden hier durch einen aus der Gehäusewand 12 in ein Langloch 13 des Steges 14 des Vorspannhebels 11 hineinreichenden Anschlagstift 15 bewirkt und sind so festgelegt, daß keine Überschaltung der Schiebemuffe 2 möglich ist, und daß vor den beiden Endstellungen noch jeweils eine Rastierung 16 für die EIN- bzw. AUS-Schaltstellung 17, 18 eingreifen kann. Die Rastierung 16 besteht gemäß Beispiel aus einer in einer Bohrung 19 der Gehäusewand 12 mittels einer Feder 20 abgestützten Kugel 21, die in je ein der jeweiligen EIN- oder AUSSchaltstellung entsprechend angeordnetes Loch 17 bzw. 18 im Steg 14 des Vorspannhebels 11 bei Erreichung des vorgegebenen Schwenkwinkels einrastbar ist.

In Fig. 2 ist die AUS-Schaltstellung der erfindungsgemäßen Anordnung dargestellt, wobei also die Trennfuge zwischen der Antriebswelle 22 und der Abtriebswelle 1 durch die darauf verschiebliche Schiebemuffe 2 noch nicht überbrückt ist. Der Vorspannhebel 11 wird dabei durch die Rastierung 16 in dem der AUS-Schaltstellung entsprechenden Loch 17 in seinem Steg 14 gehalten und die Feder 9 der Federführung 7 max. entspannt, so daß sie aufgrund einer vorgegebenen Rest-Vorspannung schiebemuffenseitig das Schwenk-Ende der Schaltgabel 5 und auf ihrer gegenüberliegenden Seite das Schwenk-Ende des Vorspannhebels 11 gegen das jeweilige Ende 17A bzw. 18A des Bolzens 8 andrückt, wobei also die beiden Hebel 5 und 11 max. auseinandergespreizt sind.

Diese Hebel 5 und 11 sind gemäß Beispiel in leichter, aber biegesteifer Blech-Formteilekonstruktion hergestellt, wobei die Schaltgabel 5 als flacher Steg quer auf der Schwenkwelle 6 gelagert ist und an ihrem Schwenk-Ende eine hülsenartig angerollte Bolzenführung 10 aufweist, während der Vorspannhebel 11 als ein Winkelprofil gestaltet ist, dessen einer, zur Achse der Welle paralleler Steg 14 mit den Löchern 17, 18 für die Rastierung 16 und für das Langloch 13, in das der Anschlagstift 15 hineinragt, versehen ist.

Durch das obere Ende des anderen, zur Achse der Schwenkwelle 6 parallelen Steges des Vorspannhebels 11 ist der Bolzen 8 gesteckt, der die Feder 9 zwischen den Hebeln 5, 11 führt bzw. vorspannt und dessen wirksame Länge über auf der Feder abgewandten Seite des Steges gelegene Stellmuttern am Bolzenende 18A, z. B. mittels Kontermuttern zwecks Kraft- und/oder Weg-Justage, leicht veränderlich ist.

In Fig. 3 ist eine Vorwahlstellung für die EIN-Schaltung gezeigt, bei welcher die Schiebemuffe 2 noch nicht in Formschluß mit der Antriebswelle 22 gelangt ist, aber über die Schaltgabel 5 bereits durch den in die EIN-Rastierung geschobenen Vorspannhebel 11 bzw. die von diesem zusammengedrückte Feder 9 elastisch in Richtung Antriebswelle 22 und gegen deren Außenverzahnung gedrückt wird. Die dabei durch die verkürzte Abstützung zwischen den Hebeln 5, 11 erhöhte Vorspannung der Feder 9 bleibt ohne weitere Bedienungseingriffe so lange bestehen und führt so lange zu einem beidseitigen Freiwerden der Bolzenenden 17A bzw. 18A von der Belastung durch die Federspannung, bis die Schiebemuffe 2 mit ihrer Innenverzahnung in die Außenverzahnung der Antriebswelle 22 eingerastet ist. Der Fahrer braucht also z. B. beim Einschalten eines Zusatzantriebes nicht bis zum Einrasten der Schiebemuffe die Hand am Schalthebel halten, sondern kann die Bedienhand sofort wieder zurück an das Lenkrad bringen, weil die vorgewählte EIN-Schaltstellung 17 nach dem Umlegen der Schwenkwelle 6 selbstsichernd herbeigeführt bzw. beibehalten wird.

In Fig. 4 ist die EIN-Schaltstellung dann ohne Änderung der Rastierungsposition 18 vollends erreicht und die Schiebemuffe 2 unter Entspannung der Feder 9 mit der Antriebswelle 22 in Formschluß gelangt. Die Schaltgabel 5 und der Vorspannhebel 11 haben dabei beide die durch den Anschlagstift 15 begrenzte max. Schwenkbewegung gegenüber der AUS-Schaltstellung vollends beendet.

Sie weisen nun wieder etwa die gleiche Spreizung zueinander auf, wie in Fig. 2, jedoch um den Schwenkwinkel der Schwenkwelle 6 in Richtung Antriebswelle 22 verdreht, und die Feder 9 ist wieder auf die durch die Bolzenenden 17A, 18A vorgegebene Vorspannlänge entspannt.

Die schematische Fig. 5 entspricht der in Fig. 2 dargestellten und beschriebenen Situation, die Fig. 6 sinngemäß derjenigen in Fig. 3 und Fig. 7 derjenigen in Fig. 4.

Funktionell ist mit der erfindungsgemäßen Anordnung noch von besonderem Vorteil, daß einerseits die EIN-Schaltung leicht und rasch bei immer gleichem Betätigungswiderstand möglich ist, andererseits aber die Rücknahme der Schiebemuffe 2 in die AUS- Schaltstellung 18A durch direkten ungefederten Kraftschluß von Schwenkwelle 6 bzw. Vorspannhebel 11 einerseits und Schaltgabel 5 andererseits über den bei AUSSchaltbewegung (wie Fig. 2) beidseits am Hebel 5, 11 anschlagenden Bolzen 8 unmittelbar und verzögerungslos möglich ist. Damit erhält der Fahrer die sichere Gewißheit, daß der Zusatzantrieb abgeschaltet, also die Schiebemuffe tatsächlich außer Eingriff ist. Die Feder wird dabei nur beim eigentlichen Einschaltvorgang kurzzeitig belastet und ist somit vor Ermüdungsgefahr geschützt.

Dadurch, daß die Hebelrastierungen hierbei unmittelbar in die Schalteinrichtung selbst integriert sind, werden auch Fernbedienungen, z. B. über Gestänge, leichter realisierbar und betriebssicherer. Das Grundprinzip der erfindungsgemäßen Anordnung kann dabei natürlich auch mit einer größeren Anzahl von Federn und/oder mit getrennten Hebel-Schwenkachsen bzw. anstelle einer Schwenkanordnung von Schaltgabel und Vorspannhebel mit sinngemäß zueinander linear verschieblichen Schalt- bzw. Vorspannelementen realisiert werden.

Bezugszeichen

1 Abtriebswelle
2 Schiebemuffe
3 Umfangsnut von 2
4 Gleitstein in 3
5 Schaltgabel
6 Schwenkwelle
7 Federführung
8 Bolzen von 7
9 Feder von 7
10 Bolzenführung in 5
11 Vorspannhebel
12 Gehäusewand

13 Langloch in 11
14 Steg von 11
15 Anschlagstift
16 Rastierung
17 Loch für 16 für A U S
17A Bolzenende für A U S
18 Loch für 16 für E I N
18A Bolzenende für E I N
19 Bohrung von 16
20 Feder von 16
21 Kugel von 16
22 Antriebswelle

## Patentansprüche

1. Federanordnung an einer Schaltkupplung, mit deren Schiebemuffe (2), in deren Umlaufnut (3) eine Schaltgabel (5) eingreift, unter Zwischenschaltung von Federn (9) zwei koaxiale Wellenenden (2, 22) in bzw. außer Eingriff bringbar sind, wobei die Federn (9) außerhalb der Schiebemuffe (2) zwischen der Schaltgabel (5) und einer Betätigungsstange (6) mit verstellbarer Vorspannmöglichkeit angeordnet sind, dadurch gekennzeichnet, daß die Betätigungsstange für die als Formschlußkupplung ausgebildete Schaltkupplung eine gehäusefest gelagerte Schwenkwelle (6) ist, mit welcher ein Vorspannhebel (11) begrenzt dreh- bzw. schwenkbar ist, in dessen schwenkendem Ende ein von einer Feder (9) umschlossener Bolzen (8) in Kuppelrichtung begrenzt axial beweglich geführt ist, dessen gegenüberliegendes Ende auf ebenfalls begrenzte Axialbeweglichkeit erlaubende Weise im freien Ende der Schaltgabel (5) geführt ist, und daß die Feder (9) nur beim EINSchalten durch Anlage an der Schaltgabel (5) auf Grund des verkürzten Abstandes zwischen Vorspannhebel (11) und Schaltgabel (5) kurz belastet ist, beim AUS-Schalten aber ein starrer Kraftschluß zwischen Vorspannhebel (11) und Schaltgabel (5) in Bewegungsrichtung durch Zugübertragung mittels des Bolzens (8) gegeben ist, wobei die Vorspannmöglichkeit durch lageverschiebliche Anschläge (Muttern) auf dem Bolzen (8) vor dem jeweiligen Ende der Feder (9) gegeben ist.

2. Federanordnung nach Anspruch 1, dadurch gekennzeichnet,
- daß die Feder (9) in einer EIN-Schaltstellung (18) des Vorspannhebels (11) von diesem bis zur Einrastung der Schiebemuffe (2) auf Minimallänge gegen die Schaltgabel (5) zusammengedrückt ist,
- und daß die Feder (9) sowohl bei Einrastung der Schiebemuffe (2) als auch bei AUS-Schaltstellung (17) des Vorspannhebels (11) auf Normallänge gedehnt ist.

3. Federanordnung nach Anspruch 1 oder 2, dadurch gekennzeichnet, daß für die AUS- und EIN-Schaltstellungen (17, 18) Rastierungen (16) zwischen dem Vorspannhebel (11) und einer Gehäusewand (12) vorgesehen sind.

4. Federanordnung nach einem der vorstehenden Ansprüche, dadurch gekennzeichnet, daß die Schwenkwelle (6) auch für die Schaltgabel (5) Schwenkachse ist.

5. Federanordnung nach einem der vorstehenden Ansprüche, dadurch gekennzeichnet, daß je eine Federführung (7) im Bereich der Eingriffspunkte bzw. Gleitsteine (4) der Schaltgabel (5) und je ein Vorspannhebel (11) beiderseits der Schiebemuffe (2) vorgesehen sind.

6. Federanordnung nach einem der Ansprüche 3, 4 oder 5, dadurch gekennzeichnet, daß die Rastierungen (16) aus in die Gehäusewand (12) eines Schaltgetriebes eingelassenen Rastkugeln (21) und entsprechenden Bohrungen (17, 18) in einem Steg (14) des bzw. der Vorspannhebel(s) (11) bestehen.

## Claims

1. Spring arrangement on a clutch, whose sliding sleeve (2), in the peripheral groove (3) of which a shift fork (5) engages, can be engaged with or disengaged from two coaxial shaft ends (2, 22) through the intermediary of springs (9), the springs (9) being arranged outside of the sliding sleeve (2) between the shift fork (5) and an operating rod (6) with adjustable pretensioning potential, characterised in that the operating rod for the clutch, which is formed as a positive clutch, is a pivot shaft (6) which is rigid with the housing and by means of which a pretensioning lever (11) can be rotated or pivoted in a limited manner, in the pivoting end of which lever a bolt (8), which is surrounded by a spring (9), can be moved axially in the coupling direction in a limited manner and the opposite end of which is guided in the free end of the shift fork (5) in a way which also permits limited axial mobility, and that the spring (9) is only loaded briefly upon engagement by contact with the shift fork (5) due to a shortened distance between the pretensioning lever (11) and the shift fork (5), but upon disengagement a rigid frictional connection between the pretensioning lever (11) and the shift fork (5) is established in the direction of movement by the transmission of traction by means of the bolt (8), the pretensioning potential being provided by stops (nuts) on the bolt (8) before the respective end of the spring (9).

2. Spring arrangement according to claim 1, characterised in that, when the pretensioning lever (11) is in an engagement position (18), the spring (9) is compressed by the latter to a minimum length against the shift fork (5) until the sliding sleeve (2) is engaged, and that the spring (9) is extended to its normal length both upon engagement of the sliding sleeve (2) and when the pretensioning lever (11) is in the disengagement position (17).

3. Spring arrangement according to claim 1 or 2, characterised in that locking elements (16) are provided between the pretensioning lever (11) and a housing wall (12) for the disengagement and engagement positions (17, 18).

4. Spring arrangement according to one of the preceding claims, characterised in that the pivot shaft (6) is also the pivot axis for the shift fork (5).

5. Spring arrangement according to one of the preceding claims, characterised in that a respective spring guide (7) is provided in the area of the engagement points or sliding blocks (4) of the shift fork (5), and a respective pretensioning lever (11) is provided on both sides of the sliding sleeve (2).

6. Spring arrangement according to one of claims 3, 4 or 5, characterised in that the locking elements (16) consist of locking balls (21), which are inserted in the housing wall (12) of a gear shift system, and corresponding bores (17, 18) in an arm (14) of the pretensioning lever(s) (11).

**Revendications**

1. Dispositif à ressort pour un embrayage ayant un manchon coulissant (2) pourvu d'une gorge périphérique (3) dans laquelle est engagée une fourchette d'embrayage (5) et agencé pour accoupler et désaccoupler deux extrémités d'arbres respectifs coaxiaux (2, 22) à l'aide de ressorts (9) interposés en dehors du manchon coulissant (2) entre la fourchette (5) et une barre de commande (6) et susceptibles d'une précontrainte réglable, caractérisé en ce que la barre de commande de l'embrayage, lequel est du type à crabotage, est un arbre pivotant (6) supporté par un carter et agencé pour faire tourner ou pivoter de manière limitée un levier de précontrainte (11) dans une extrémité oscillante duquel un boulon (8) entouré d'un ressort (9) est monté avec une mobilité axiale limitée dans la direction d'accouplement, une extrémité opposée du boulon étant également montée avec une mobilité axiale limitée dans l'extrémité libre de la fourchette (5), et en ce que le ressort (9) n'est chargé que brièvement, pour l'enclenchement de l'embrayage, par appui contre la fourchette (5) en raison du rapprochement du levier de précontrainte (11) et de la fourchette (5), tandis que pour le déclenchement de l'embrayage le boulon (8) assure un entraînement rigide entre le levier de précontrainte (11) et la fourchette (5) par traction dans le sens du déplacement, la possibilité de précontrainte étant réalisée au moyen de butées (écrous) réglables en position le long du boulon (8) en regard de l'extrémité correspondante du ressort (9).

2. Dispositif selon la revendication 1, caractérisé :
 - en ce que le ressort (9), dans une position d'enclenchement (18) du levier de précontrainte (11), est comprimé par celui-ci contre la fourchette (5) jusqu'à une longueur minimale, jusqu'à ce que le manchon coulissant (2) soit engagé,
 - et en ce que le ressort (9) est détendu jusqu'à sa longueur normale aussi bien quand le manchon coulissant (2) est engagé que dans une position de déclenchement (17) du levier de précontrainte (11).

3. Dispositif selon la revendication 1 ou 2, caractérisé en ce qu'il comporte un mécanisme à crans (16) entre le levier de précontrainte (11) et une paroi (12) du carter pour définir les positions d'enclenchement et de déclenchement (17, 18).

4. Dispositif selon l'une des revendications précédentes, caractérisé en ce que l'arbre pivotant (6) constitue également un axe de pivotement de la fourchette (5).

5. Dispositif selon l'une des revendications précédentes, caractérisé en ce qu'il comporte, de part et d'autre du manchon coulissant (2), un levier de précontrainte respectif (11) et un entraînement à ressort (7), à proximité des points d'action ou des pièces de glissement (4) de la fourchette (5).

6. Dispositif selon l'une des revendications 3, 4 ou 5, caractérisé en ce que les mécanismes à crans (16) comportent des billes de retenue (21), logées dans la paroi du carter (12) d'une boîte de vitesses, et des alésages correspondants (17, 18) ménagés dans une aile (14) du ou des leviers de précontrainte (11).

FIG. 1

FIG.5  FIG.6  FIG.7

FIG.4

FIG.3

FIG.2